(19) Europäisches Patentamt / European Patent Office / Office européen des brevets

(11) **EP 3 644 119 B1**

(12) **EUROPEAN PATENT SPECIFICATION**

(45) Date of publication and mention
of the grant of the patent:
**10.07.2024 Bulletin 2024/28**

(21) Application number: **18202768.0**

(22) Date of filing: **26.10.2018**

(51) International Patent Classification (IPC):
**G02F 1/29** *(2006.01)*   **G02F 1/1339** *(2006.01)*
**G02F 1/1337** *(2006.01)*

(52) Cooperative Patent Classification (CPC):
**G02F 1/29; G02F 1/133784; G02F 1/13392;**
G02F 1/13396; G02F 1/291; G02F 1/294

(54) **LIQUID CRYSTAL PHASE MODULATION DEVICE AND METHOD FOR FABRICATING THE SAME**

FLÜSSIGKRISTALLPHASENMODULATIONSVORRICHTUNG UND VERFAHREN ZUR HERSTELLUNG DAVON

DISPOSITIF DE MODULATION DE PHASE À CRISTAUX LIQUIDES ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2020 Bulletin 2020/18**

(60) Divisional application:
**24175747.5 / 4 398 027**

(73) Proprietor: **Liqxtal Technology Inc.**
**74148 Tainan City (TW)**

(72) Inventors:
• **LIN, Chih-Chan**
**74148 Tainan City (TW)**
• **CHEN, Yu-Ching**
**74148 Tainan City (TW)**

(74) Representative: **Cabinet Beaumont**
**4, Place Robert Schuman**
**B.P. 1529**
**38025 Grenoble Cedex 1 (FR)**

(56) References cited:
**EP-A1- 2 565 707**      **EP-A1- 3 076 234**
**JP-A- 2015 022 195**    **US-A1- 2005 270 472**
**US-A1- 2009 015 739**   **US-A1- 2009 066 884**
**US-A1- 2010 033 669**   **US-A1- 2012 314 144**
**US-A1- 2015 370 105**

**Description**

**BACKGROUND**

Field of Invention

The present disclosure relates to a liquid crystal phase modulation device and a method for fabricating the same.

Description of Related Art

Electrically tunable optical phase modulator includes an optoelectronic material layer (i.e., liquid crystal material) having refractive index tunable based on the electric field. By designing suitable shapes of electrodes, when a specific voltage(s) is applied thereon, a phase difference distribution of the optoelectronic material layer can be made to realize various optical effects. For example, the optoelectronic material layer can imitate an optical element, such as a lens, a grating, and a switch.

The document US2012/0314144 relates to a display device having a display panel and a liquid crystal lens panel.

The document US2010/0033669 relates to a display device and method for manufacturing a liquid crystal display device.

The document US2009/0015739 relates to an electrically-driven liquid crystal lens and display device using the same.

The document EP3076234 relates to a Fresnel liquid crystal lens panel.

The document JP2015022195 relates to a substrate for a liquid crystal lens.

The document EP2565707 relates to a liquid crystal optical device such as a Fresnel type liquid crystal lens.

The document US2005/0270472 relates to a liquid crystal display device and to a substrate to be used for a liquid crystal display device.

The document US2009/0066884 relates to a liquid crystal display and process for producing the same.

The document US2015/0370105 relates to a liquid crystal display including light blocking member overlapping spacer.

**SUMMARY**

In some embodiments of the present disclosure, spacers are distributed in response to the bending of the substrate, so as to keep a cell gap of a liquid-crystal device uniform. Furthermore, the spacers are designed to have a shape less influencing a rubbing procedure, such that a rubbed alignment layer can effectively align the liquid crystal molecules.

The invention is set out in the appended set of claims.

It is to be understood that both the foregoing general description and the following detailed description are by examples, and are intended to provide further explanation of the disclosure as claimed.

**BRIEF DESCRIPTION OF THE DRAWINGS**

The disclosure can be more fully understood by reading the following detailed description of the embodiment, with reference made to the accompanying drawings as follows:

Fig. 1 is a flow chart of a method for fabricating a liquid crystal phase modulation device according to some embodiments of the present disclosure;

Fig. 2A is a system for fabricating a liquid crystal phase modulation device according to some embodiments of the present disclosure;

Fig. 2B illustrates operations of a computing device according to some embodiments of the present disclosure;

Figs. 3A-3G illustrate intermediate stages of a method for fabricating a liquid crystal phase modulation device according to some embodiments of the present disclosure;

Figs. 4A-4C illustrate intermediate stages of a method for fabricating a liquid crystal phase modulation device according to some embodiments of the present disclosure;

Fig. 5 is a schematic cross-sectional view of a liquid crystal phase modulation device according to some embodiments of the present disclosure;

Fig. 6 is a schematic cross-sectional view of a liquid crystal phase modulation device according to some embodiments of the present disclosure; and

Figs. 7A and 7B are a schematic top view of a spacer in a liquid crystal phase modulation device according to some embodiments of the present disclosure.

## DETAILED DESCRIPTION

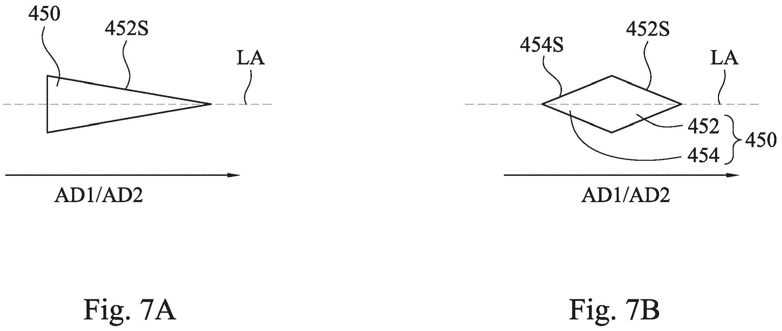

The following embodiments illustrated in Fig. 7B are not according to the invention and are present for illustration purposes only.

Reference will now be made in detail to the present embodiments of the disclosure, examples of which are illustrated in the accompanying drawings. Wherever possible, the same reference numbers are used in the drawings and the description to refer to the same or like parts.

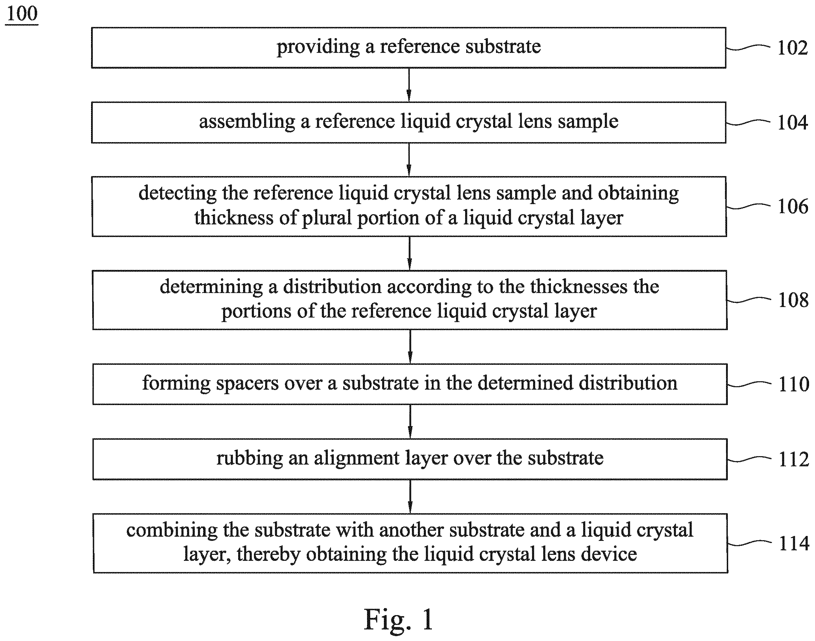

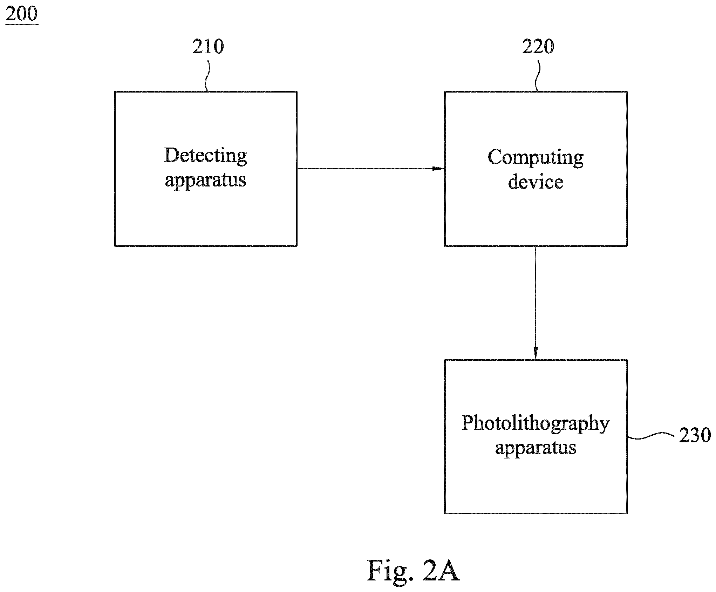

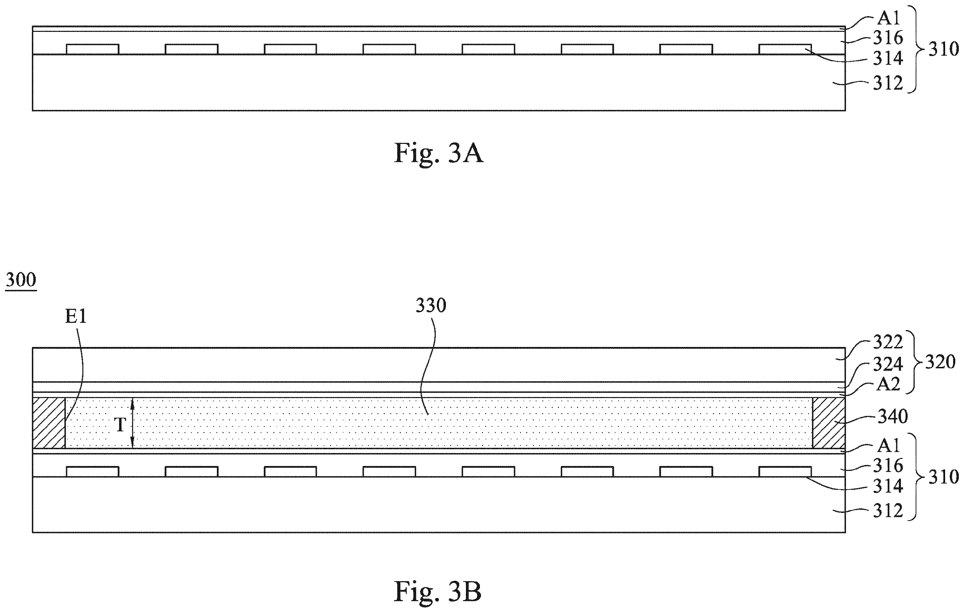

Fig. 1 is a flow chart of a method 100 for fabricating a liquid crystal phase modulation device 400 according to some embodiments of the present disclosure. Fig. 2A is a system 200 for fabricating a liquid crystal phase modulation device 400 according to some embodiments of the present disclosure. Figs. 3A-3G illustrate intermediate stages of a method for fabricating the liquid crystal phase modulation device 400 according to some embodiments of the present disclosure. The illustration is merely exemplary and is not intended to be limiting beyond what is specifically recited in the claims that follow. It is understood that additional operations may be provided before, during, and after the operations shown by Fig. 1, and some of the operations described below can be replaced or eliminated for additional embodiments of the method. The order of the operations/processes may be interchangeable.

Referring to Figs. 1 and Fig. 3A, the method 100 begins at step 102 where a substrate 310 is provided. Herein, the substrate 310 includes a base substrate 312, plural electrodes 314 over the base substrate 312, a dielectric layer 316, and an alignment layer A1 thereon. The base substrate 312 may be rigid and/or flexible substrates. For example, the base substrate 312 is made of suitable transparent insulating materials, such as glass, quartz, or polymeric material. The electrodes 314 may be made of suitable transparent conductive materials, such as indium tin oxide (ITO) or antimony tin oxide (ATO). The dielectric layer 316 is made of silicon oxide, polymer, or other suitable dielectric material. The alignment layer A1 may be made of polyimide.

Referring to Figs. 1 and Fig. 3B, the method 100 proceeds to step 104 where a reference liquid crystal phase modulation sample 300 is assembled. To be specific, the reference substrate 310, a substrate 320, a liquid crystal layer 330, and a reference sealant 340 are combined to form the reference liquid crystal phase modulation sample 300. The substrates 310 and 320 are opposite to each other. The liquid crystal layer 330 is between the substrates 310 and 320. The reference sealant 340 is between the substrates 310 and 320 and surrounds the liquid crystal layer 330. The sealant 340 is designed to have a desired thickness for spacing the substrates 310 and 320 from each other, and allowing the liquid crystal layer 330 therebetween to have a corresponding thickness enough to realizing phase modulation, such as lens effect. For example, the thickness of the sealant 340 may be in a range of about 10 micrometers to about 50 micrometers. In some embodiments, a thinning process may be performed to thin the base substrate 312 of the substrates 310 or a base substrate 322 of the substrates 320. In some embodiments, after the assembly, a chipping process may be performed.

Herein, the substrate 320 includes a base substrate 322, an electrode layer 324 over the base substrate 312, and an alignment layer A2 thereon. The base substrate 322 may be rigid and/or flexible substrates. For example, the base substrate 322 is made of suitable transparent insulating materials, such as glass, quartz, or polymeric material. The electrode layer 324 may be made of suitable transparent conductive materials, such as indium tin oxide (ITO) or antimony tin oxide (ATO). The alignment layer A2 may be made of polyimide. The alignment layer A2 may be rubbed in an alignment direction according to the alignment direction AD1 of the alignment layer A1. For example, the alignment direction of the alignment layer A2 may be parallel with the alignment direction AD1 of the alignment layer A1 for a parallel-aligned (PA) liquid crystal configuration. In some other examples, the alignment direction of the alignment layer A2 may be orthogonal to the alignment direction AD1 of the alignment layer A1 for a twisted nematic (TN) liquid crystal configuration.

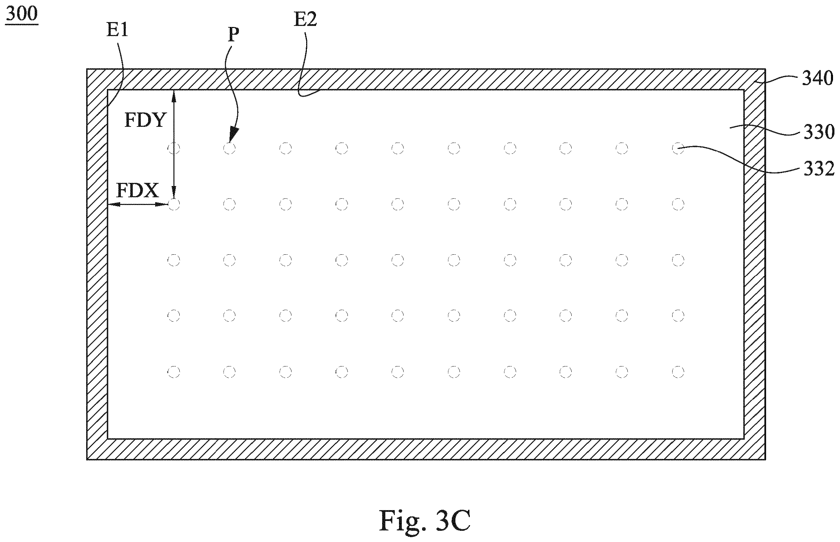

In some embodiments, due to the thin substrates, the large cell gap, and the large area of the reference liquid crystal phase modulation sample 300, the substrates 312 and 322 may bend and the cell gap between the substrates 312 and 322 (e.g., the thickness of the liquid crystal layer 330) may vary at different positions. The bonding of the substrates 312 and 322 may further enhance the non-uniformity of the cell gap therebetween. Fig. 3C is a top view of the reference liquid crystal phase modulation sample 300 of Fig. 3B. For example, in Fig. 3C, the thicknesses of plural portions 332 of the liquid crystal layer 330 at plural various positions P may be different.

Reference is made to Fig. 1, Fig. 2A and Figs. 3B and 3C. The method 100 proceeds to step 106 where the reference liquid crystal phase modulation sample 300 is detected, so as to obtain thicknesses T of the portions 332 of the liquid crystal layer 330 at positions P. To specific, the system 200 has a detecting apparatus 210 capable of detecting optical properties of the reference liquid crystal phase modulation sample 300 at plural various positions P. By analyzing the detected optical properties of the reference liquid crystal phase modulation sample 300 at plural various positions P, the thicknesses T of portions 332 of liquid crystal layer 330 at the various positions P are obtained.

In the present embodiments, the detected positions P are uniformly distributed and spaced by the same distance. In some other embodiments, the detected positions P may be arranged in a different way, such as random distribution. According to the detecting apparatus 210, the portions 332 may be detected time-sequentially or simultaneously. In some embodiments, for example, the detecting apparatus 210 may be a spectrometer, a spectrophotometer, or other suitable apparatus. In some embodiments, the sealant 340 is detected by suitable optical microscope prior to detecting the thicknesses of the portions 332, and the position of the sealant 340 is marked. The marked position of the sealant 340 may serve as a reference with respect to the positions of portions 332 during detecting the thickness of the portions 332. For example, positions of the inner edges E1 and E2 of the sealant 340 are marked.

The method 100 proceeds to step 108 where a distribution of spacers to be formed is determined according to the detected thicknesses T of the plural portions 332 of the liquid crystal layer 330. For example, the system 200 includes a computing device 220 connected to the detecting apparatus 210. In some embodiments, the computing device 220 includes a processor, memory, and an interface. For example, the computing device 220 may be a single computer or a distributed computer. The computing device 220 receives information (e.g., a signal) of the detected thicknesses T and detected positions P from the detecting apparatus 210 and performing statistical analysis processes, so as to obtain the distribution of spacers to be formed. In some embodiments, the computing device 220 includes one or more software programs for calculating the data.

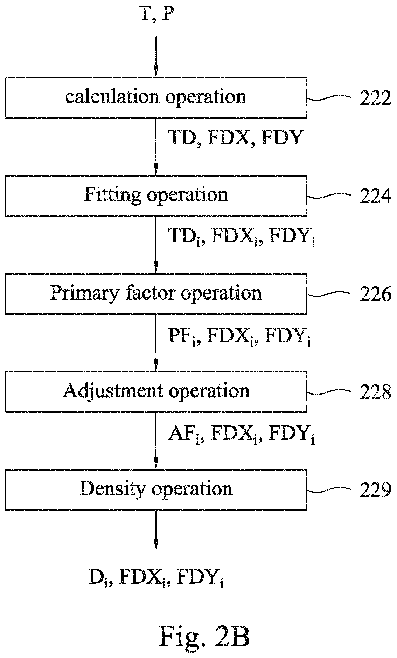

Fig. 2B illustrates operations 222-229 of the computing device 220 according to some embodiments of the present disclosure. Reference is made to Fig. 2A and Fig. 2B. To be specific, at calculation operation 222, thickness differences TD, horizontal distances FDX, and vertical distances FDY at the detected positions P are obtained by calculating the positions P and the detected thickness T. In the present embodiments, at one of the positions P, the thickness difference TD is referred to as the difference between a desired thickness of the liquid crystal layer 330 and the detected thickness T of the liquid crystal layer 330 at said one of the positions P in Fig. 3B. The horizontal distance FDX is referred to as a distance between said one of the positions P and an edge E1 of the sealant 340 in Fig. 3C. The vertical distance FDY is a distance between said one of the positions P and an edge E2 of the sealant 340 in Fig. 3C.

Subsequently, the computing device 220 builds a relationship between the distances FDX/FDY and the thickness differences TD at the detected positions P, for example, by a fitting operation 224. In some embodiments, the relationship is linear and described in formula (a):

$$TD_i = \mathrm{a} \times FDX_i + b$$

$$TD_i = \mathrm{a} \times FDY_i + b$$

Where a and b are parameters, and i is a positive integral indicating the number of the positions of the liquid crystal layer 330 to be count. Through the relationship, the thickness differences $TD_i$ of the liquid crystal layer 330 at any positions (e.g., positions with distances $FDX_i$ and/or $FDY_i$ from the sealant 340) can be simulated and obtained. As the above definitions, the thickness difference $TD_i$ is referred to as the difference between the desired thickness of the liquid crystal layer 330 and a simulated thickness of the liquid crystal layer 330, and distances $FDX_i$ and/or $FDY_i$ is referred to as a distance between the simulated position and an edge E1/E2 of the sealant 340 in Fig. 3C.

Then, a primary factor operation 226 is performed for finding primary factors $PF_i$. The primary factors $PF_i$ are used to describe local variation of the densities of spacers to be formed. It is designed that densities of spacers to be formed is proportional to a reciprocal of the thickness differences $TD_i$ in some examples. For example, herein, the primary factors $PF_i$ may be described by the formula (b), based on a ratio of the thickness differences $TD_i$ and the maximum of the thickness differences $TD_i$. For example, formula (b) is described as:

$$PF_i = \left(\frac{TD_i}{(TD_i)_{max}}\right)^{-1} = \frac{(TD_i)_{max}}{TD_i}$$

An adjustment operation 228 is performed for adjusting the primary factors $PF_i$ by a parameter q, and thereby obtaining adjusted factors $AF_i$. The parameter q corresponds with the materials, dimensions, and thickness of the substrates (e.g. the base substrates). The parameter q is in a range of 0 to 1. For example, the parameter q is equal to 0.5. The adjustment may be described in formula (c):

$$AF_i = PF_i + q \times (100\% - PF_i)$$

Finally, a density operation 229 is performed. Herein, a desired density Dc of spacers to be formed in a center position is determined initially, and then densities of spacers to be formed in other positions (e.g., positions with distances $FDX_i$ and/or $FDY_i$ from the sealant 340) are determined by multiplying the desired density Dc by the adjusted factors $AF_i$. Through the calculation, densities $D_i$ in other positions (e.g., positions with distances $FDX_i$ and/or $FDY_i$ from the sealant 340) are obtained by formula (d). For example, the formula (d) is described as:

$$D_i = D_c \times AF_i$$

In some embodiments of the present disclosure, an example is provided in Table 1, in which the desired density Dc of spacers to be formed in the center position is determined as 10% initially. In some embodiments, the center position is about 17 millimeters away from the edge E1/E2.

Table 1

| Distance $FDX_i$ / $FDY_i$ (millimeter) | 2 | 7 | 12 | 17 |
| --- | --- | --- | --- | --- |
| Thickness difference TDi | 0.2949 | 0.6553 | 1.0157 | 1.3761 |
| Primary factor PFi | 21% | 48% | 74% | 100% |
| adjusted factors AFi | 60% | 74% | 87% | 100% |
| densities Di | 6% | 7.4% | 8.7% | 10% |

Through these operations, an uneven distribution of spacers to be formed is obtained. For example, the density of the spacers to be formed degrades when approaching the edge E1/E2.

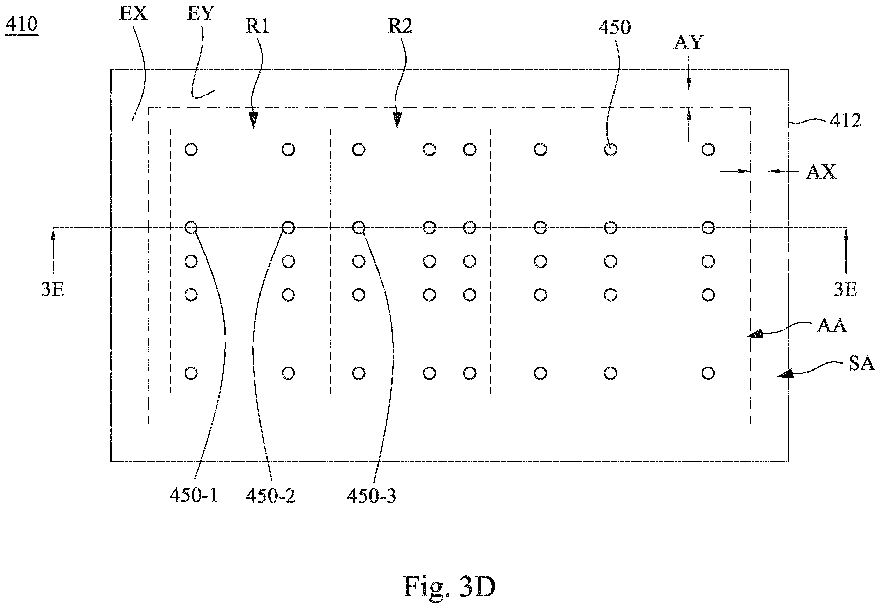

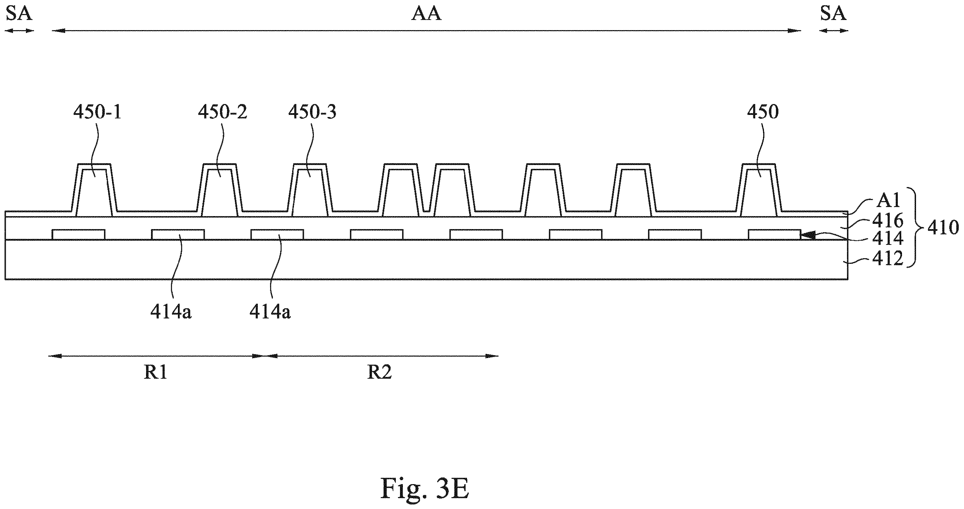

Reference is made to Fig. 1 and Figs. 3D and 3E. Fig. 3E is a cross-sectional view taken along 3E-3E of Fig. 3D. The method 100 proceeds to step 110 where spacers 450 are formed over a first substrate 410 in the determined distribution. The first substrate 410 includes a base substrate 412, a first electrode layer 414, a dielectric layer 416, and an alignment layer A1. The dielectric layer 416 is formed over the first electrodes 414. The alignment layer A1 is formed over the dielectric layer 416. Herein, the first substrate 410 is provided with an active region AA and a seal region SA surrounding the active region AA. In some embodiments, the active region AA may be designed according to customer's specification. In some embodiments, the active region AA and the seal region SA may have distances AX and AY therebetween, thereby preventing a sealant from being formed in the active region AA. For example, the distances AX and AY is in a range from about 200 micrometers to about 1000 micrometers. In some other embodiments, the active region AA may adjoin the seal region SA, and the distances AX and AY are substantially zero. The first electrode layer 414 is patterned to form first electrodes 414a in the active region AA.

In the present embodiments, the spacers 450 are formed over the dielectric layer 416 in the determined distribution. To be specific, at positions having distances $FDX_i/FDY_i$ (referring to Fig. 2B) from edges EX/EY of the seal region SA, the spacers 450 are formed to have the density $D_i$ (referring to Fig. 2B). For example, the first substrate 410 has a first region R1 and a second region R2. In the horizontal direction, the first region R1 is closer to the seal region SA than the second region R2 is, and a density of the spacers 450 in the second region R2 is greater than a density of the spacers 450 in the first region R1. Through the configuration, the spacers 450 are distributed unevenly.

Herein, the spacers 450 in the first region R1 are distributed unevenly. However, in some other embodiments, the spacers 450 in the first region R1 may be distributed uniformly, the spacers 450 in the second region R2 may be distributed uniformly, and the spacers 450 in the first region R1 have a density lower than that of the spacers 450 in the second region R2.

In some embodiments, the spacers 450 include a first spacer 450-1, a second spacer 450-2, and a third spacer 450-3 arranged in a sequence. That is, the second spacer 450-2 is between and immediately adjacent to the first spacer 450-1 and the third spacer 450-3. In the embodiments, a distance between the first spacer 450-1 and the second spacer 450-2 is different from a distance between the second spacer 450-2 and the third spacer 450-3. For example, herein, the distance between the first spacer 450-1 and the second spacer 450-2 is greater than the distance between the second spacer 450-2 and the third spacer 450-3.

In some embodiments, the spacers 450 may be formed by a photolithography apparatus 230 (referring to Fig. 2A), using suitable photolithography and etching process. For example, an organic layer is formed on the first substrate 410. The organic layer is patterned using a mask to remove portions of the organic layer, the patterned organic layer forms a plurality of spacers 450 at least in the active region AA. In some embodiments, the organic layer may be made of positive photoresist or negative photoresist. In some embodiments of the present disclosure, the spacers 450 are configured to maintain a cell gap. Herein, in the application of liquid crystal phase modulation (e.g., liquid crystal lens), the spacers 450 may have a great height (e.g., 10 micrometers to 50 micrometers), and the spacers 450 has a great width for maintaining itself on the substrate 410 steadily. For example, a width of the spacers 450 is greater than 5 micrometers.

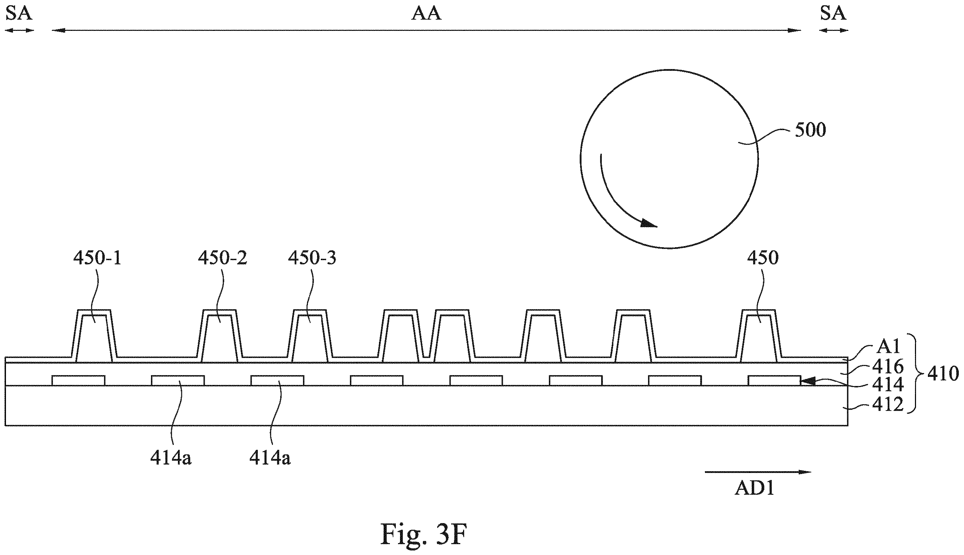

Referring to Fig. 1 and Fig. 3F, the method 100 proceeds to step 112 where a rubbing process is performed to the alignment layer A1. In some embodiments, a rubbing cloth 500 held by a roller is used to rub the alignment layer A1 in an alignment direction AD1. In some cases, because the large-sized spacers 450 may shelter some portions of the alignment layer A1, the portions of the alignment layer A1 may not be rubbed, such that the liquid crystal molecules over the portions of the alignment layer A1 may not lean in the alignment directions AD1.

In some embodiments of the present disclosure, referring to Fig. 7A and 7B, which illustrate schematic top views of one spacer 450, the spacers 450 are designed to have a long axis LA in an alignment direction AD1. That is, spacers 450 extend along the alignment direction AD1. In some embodiments, as shown in Fig. 7A, the width of the spacer 450 narrows in the alignment direction AD1. To be specific, the spacer 450 tapers along the alignment direction AD1. For example, the spacer 450 has edges 452S inclined with respect to the alignment direction AD1 and a vertex of the two edges 452S. Through the configuration, the spacers 450 may shelter less area, and the alignment layer A1 is rubbed more effectively.

In some embodiments, as shown in Fig. 7B, the spacer 450 has portions 452 and 454. The portion 452 faces the alignment direction AD1, while the portion 454 does not face the alignment direction AD1. To be specific,, the portion 452 has edges 452S facing the alignment direction AD1, and the portion 454 has edges 454S that do not face the alignment direction AD1. As illustrated in Fig. 7B, the portion 452 of the spacer 450 tapers along the alignment direction AD1, and the edges 452S incline with respect to the alignment direction AD1. Through the configuration, the spacers 450 may shelter less area, and the alignment layer A1 is rubbed more effectively. Although the spacers 450 may be designed as shown in Fig. 7A and 7B, it should not limit the scope of the present disclosure. In some other embodiments, the spacers 450 may have other shapes. For example, the spacers 450 may have a circular top view.

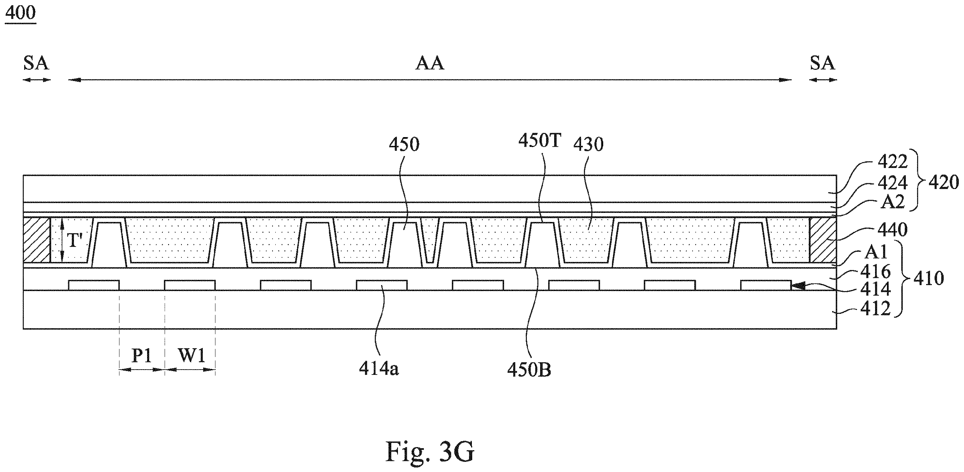

Referring to Fig. 1 and Fig. 3G, the method 100 proceeds to step 114 where the first substrate 410 is combined with a second substrate 420 and a liquid crystal layer 430, thereby obtaining the liquid crystal phase modulation device 400. Herein, the second substrate 420 includes a base substrate 422, a second electrode layer 424, and an alignment layer A2. The second electrode layer 424 is formed over the base substrate 422 and covers the active region AA. The alignment layer A2 is formed over the second electrode layer 424 and rubbed.

As shown in Fig. 3G, a liquid crystal phase modulation device 400 is provided. The liquid crystal phase modulation device 400 includes the first substrate 410, the second substrate 420, the liquid crystal layer 430, a sealant 440, the spacers 450, and the alignment layers A1 and A2. The sealant 440 is in the seal region SA and between the first substrate 410 and the second substrate 420, and surrounds the liquid crystal layer 430. For example, the sealant 440 has inner edges aligned with the edges EX/EY of the seal region SA (referring to Fig. 3D). The first electrode layer 414 has first electrodes 414a in the active region AA, while the second electrode layer 424 covers the active region AA.

In the present embodiments, the spacers 450 have a bottom surface 450B adjacent to the first substrate 410 and a top surface 450T adjacent to the second substrate 420. The bottom surface 450B has a larger area than that of the top surface 450T. Each of the spacers 450 has a height taken perpendicular to the first substrate 410 corresponding to the cell gap, such that the cell gap is maintained by the spacers 450.

In some embodiments of the present disclosure, the first substrate 410, the second substrate 420, the liquid crystal layer 430, and the sealant 440 of the liquid crystal phase modulation device 400 has a configuration similar to the substrate 310, the substrate 320, the liquid crystal layer 330, and the sealant 340 of the reference liquid crystal phase modulation sample 300. For example, the sealant 440 has a thickness equal to that of the sealant 340 of the reference liquid crystal phase modulation sample 300. A thickness of the substrate 410/420 is similar to that of the substrate 310/320. For example, the thickness of the substrate 410/420 is in a range of 0.2 to 0.5 millimeters. Through the configuration, by detecting the reference liquid crystal phase modulation sample 300, an extent of substrate bending is measured, and the spacers 450 are distributed in an uneven distribution in response to the substrate, so as to prevent and reduce the substrate bending and keep a cell gap of a liquid-crystal device uniform.

In the present embodiments, for realizing an electrically tunable phase modulation device (e.g., an electrically tunable lens with a tunable focal length, a electrically tunable grating, or a switch), the liquid crystal phase modulation device 400 is designed with suitable parameters. For example, a thickness T' of the liquid crystal layer 430 is designed to be in a range of about 10 micrometers to about 50 micrometers, such as about 20 micrometers to about 50 micrometers. If the thickness T' of the liquid crystal layer 430 is less than the thickness range, the device may not provide suitable optical power (e.g. lens power) for realizing phase modulation. If the thickness T' of the liquid crystal layer 430 is greater the thickness range, the device may take a long response time to operate and return, which in turn will result in limited applications. In some embodiments, a width W1 of the electrodes 414a is designed to be in a range of about 1 micrometer to hundreds of micrometers, such as about 1 micrometer to about 10 micrometers. In some embodiments, a pitch P1 between the electrodes 414a is designed to be in a range of about 1 micrometer to hundreds of micrometers, such as about 1 micrometer to about 10 micrometers. For example, a length and width of the active area AA may be in a range of about 1 inch to about 2 inches.

In some embodiments, plural liquid crystal phase modulation devices 400 are stacked for enhancing the optical power (e.g., lens power). For example, two to four liquid crystal phase modulation devices 400 are stacked and connected with the active region AA in an overlaying position. In some embodiments, the stacked liquid crystal phase modulation devices 400 may share their base substrates with each other for reducing the overall thickness.

In some embodiments, the liquid crystal phase modulation device 400 may further includes a light shielding layer having an opening corresponding with the active area AA. The light shielding layer may expose at least a portion of the active area AA and shield the seal region SA, so as to prevent the sealant 440 from being observed. For example, the opening of the light shielding layer has an area equal to that of the active area AA. The spacers 450 are disposed in the active area AA but not in the seal region SA, and most of the spacers 450 are not covered by the light shielding layer and may be perceived by users. In some embodiments, fabrication variation may occur at a portion of the active area AA adjacent the seal region SA due to the accuracies of mask alignment and mask dimensions and shadow effect. In some examples, the opening of the light shielding layer may have an area smaller than that of the active area AA, such that the light shielding layer further covers the portion of the active area AA adjacent the seal region SA, which in turn will prevent an undesired performance resulted from the fabrication variation from being observed.

In some embodiments, the light shielding layer may be between the alignment layer A1 and the dielectric layer 416, between the dielectric layer 416 and the substrate 412, between the alignment layer A2 and the second electrode layer 424, or between the second electrode layer 424 and the substrate 422. The light shielding layer has a transmittance lower than 20%. The light shielding layer may be conductive or dielectric materials. For example, in some examples, the light shielding layer is made of opaque inks, such as black inks. In some examples, the light shielding layer is made of metal. In some embodiments, a thickness of the light shielding layer may be greater than about 500 micrometers. In some embodiments, the configuration of the light shielding layer may be omitted, and the non-active area (which is out of the active area AA) may be viewed by users.

In some embodiments of the present disclosure, the base substrates 412 and 422 may be rigid and/or flexible substrates. For example, the base substrates 412 and 422 are made of suitable transparent insulating materials, such as glass, quartz, or polymeric material. The first and second electrode layers E1 and E2 may be made of suitable transparent conductive materials, such as indium tin oxide (ITO) or antimony tin oxide (ATO). The dielectric layer 416 is made of silicon oxide, polymer, or other suitable dielectric material. The alignment layers A1 and A2 may be made of polyimide.

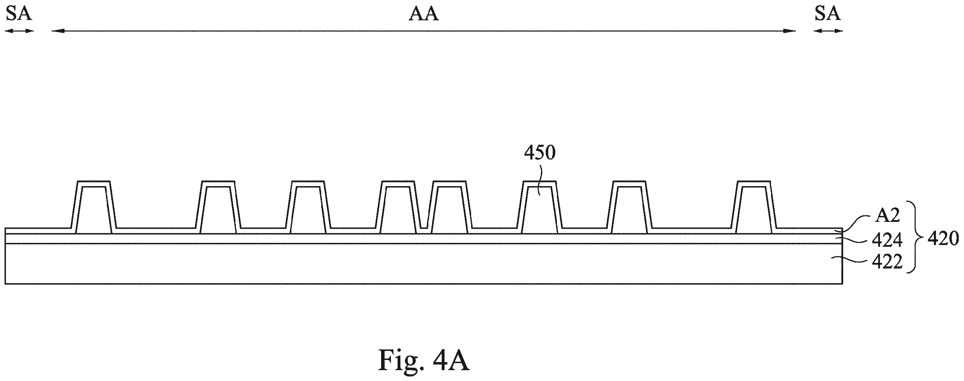

Figs. 4A-4C illustrate intermediate stages of a method for fabricating a liquid crystal phase modulation device according to some embodiments of the present disclosure. Referring to Fig. 1 and Fig. 4A, the method proceeds to step 110 where spacers 450 are formed on the second substrate 420, instead of formed on the first substrate 410 as shown by Fig. 3F. The configuration of the second substrate 420 is similar to those aforementioned, and therefore not repeated herein.

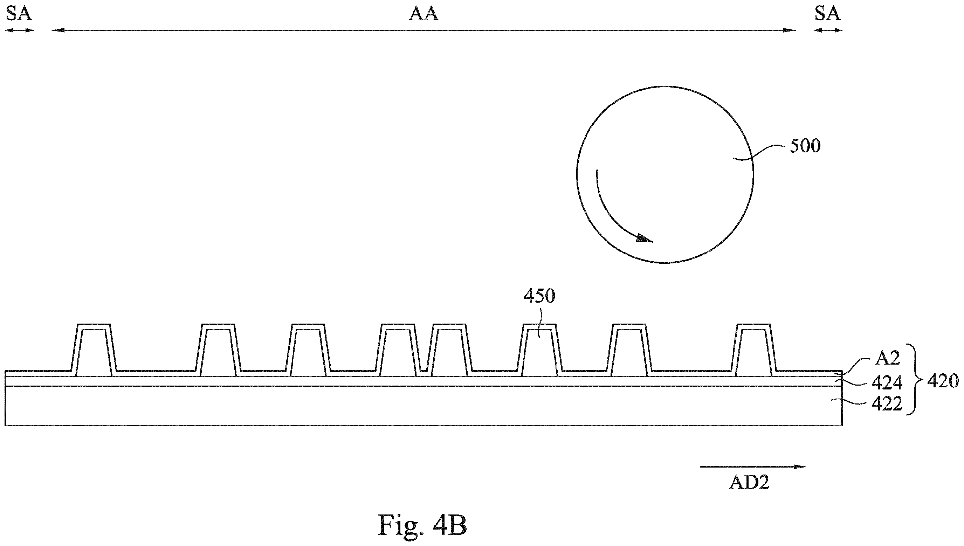

Referring to Fig. 1 and Fig. 4B, the method 100 proceeds to step 112 where a rubbing process is performed to the alignment layer A2. In some embodiments, a rubbing cloth 500 held by a roller is used to rub the alignment layer A2 in an alignment direction AD2. In some embodiments, the spacers 450 are designed to have a long axis LA parallel as the alignment direction AD2, for example, as shown by Fig. 7A and 7B, such that the spacers 450 may shelter less area, and the alignment layer A2 is rubbed more effectively.

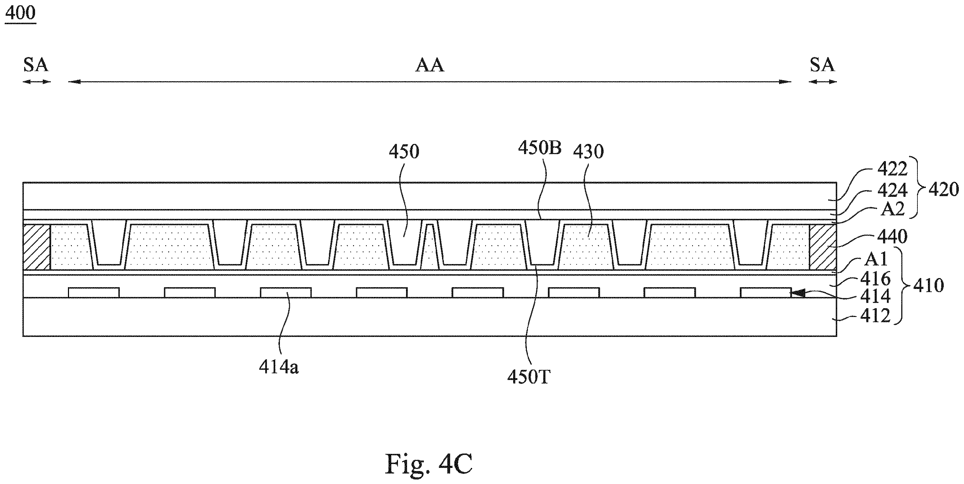

Referring to Fig. 1 and Fig. 4C, the method 100 proceeds to step 114 where the second substrate 420 is combined with the first substrate 410 and the liquid crystal layer 430, thereby obtaining the liquid crystal phase modulation device 400. The configuration of the first substrate 410 is similar to those aforementioned, and therefore not repeated herein.

As shown in Fig. 4C, a liquid crystal phase modulation device 400 is provided. The liquid crystal phase modulation device 400 includes the first substrate 410, the second substrate 420, the liquid crystal layer 430, a sealant 440, the spacers 450, and the alignment layers A1 and A2. The sealant 440 is in the seal region SA and between the first substrate 410 and the second substrate 420, and surrounds the liquid crystal layer 430. The first electrode layer 414 has first electrodes 414a in the active region AA, while the second electrode layer 424 covers the active region AA. In the present embodiments, the spacers 450 have a bottom surface 450B adjacent to the second substrate 420 and a top surface 450T adjacent to the first substrate 410. The bottom surface 450B has a larger area than that of the top surface 450T. Each of the spacers 450 has a height taken perpendicular to the first substrate 410 corresponding to the cell gap, such that the cell gap is maintained by the spacers 450.

Other details of the present embodiments are similar to those aforementioned, and not repeated herein.

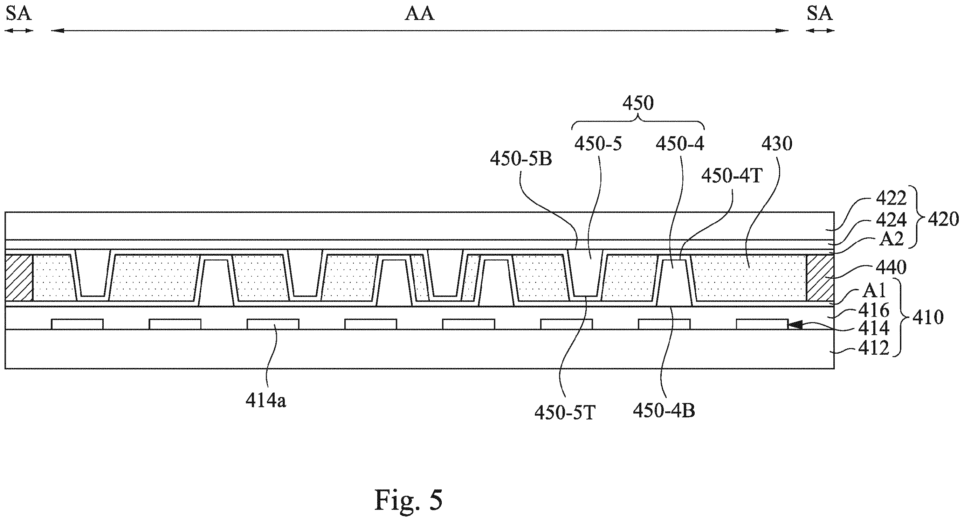

Fig. 5 is a schematic cross-sectional view of a liquid crystal phase modulation device 400 according to some embodiments of the present disclosure. The present embodiment is similar to the embodiments of Fig. 3G and Fig. 4C, and the difference between the present embodiment and the embodiments of Fig. 3G and Fig. 4C is that: in the present embodiments, a first portion of the spacers 450 (referred to as spacers 450-1 hereinafter) are formed on first substrate 410, while a second portion of the spacers 450 (referred to as spacers 450-5 hereinafter) are formed on the second substrate 420. For example, the spacers 450-1 have a bottom surface 450-1B adjacent to the first substrate 410 and a top surface 450-1T adjacent to the second substrate 420, and the spacers 450-5 have a bottom surface 450-5B adjacent to the second substrate 420 and a top surface 450-5T adjacent to the first substrate 410. The bottom surfaces 450-4B and 450-5B have a larger area than that of the top surfaces 450-4T and 450-5T, respectively. In some embodiments, the size or shapes of the spacers 450-4 and 450-5 may be the same or different. Other details of the present embodiments are similar to those aforementioned, and not repeated herein.

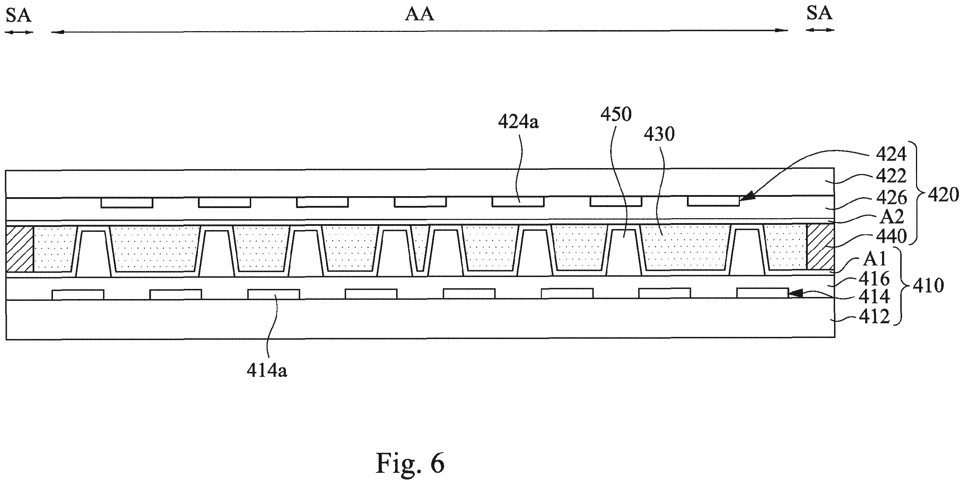

Fig. 6 is a schematic cross-sectional view of a liquid crystal phase modulation device 400 according to some embodiments of the present disclosure. The present embodiment is similar to the embodiment of Fig. 3G, and the difference between the present embodiment and the embodiment of Fig. 3G is that: the first electrode layer 414 has first electrodes 414a in the active region AA, and the second electrode layer 424 has second electrodes 424a in the active region AA. In some embodiments, the first electrodes 414a and the second electrodes 424a may have the same pitch, but it should not limit the scope of the present embodiments. In some other embodiments, the second electrodes 424a may have a pitch different from that of the first electrodes 414a. Other details of the present embodiments are similar to those aforementioned, and not repeated herein.

Based on the above discussions, it can be seen that the present disclosure offers advantages over liquid crystal devices. It is understood, however, that other embodiments may offer additional advantages, and not all advantages are necessarily disclosed herein, and that no particular advantage is required for all embodiments. One advantage is that spacers are distributed in response to the bending of the substrate, so as to keep a cell gap of a liquid-crystal device uniform. Another advantage is that the shape of the spacers is designed to less influence a rubbing procedure, such that a rubbed alignment layer can effectively align the liquid crystal molecules.

**Claims**

1. A liquid crystal phase modulation device (400), comprising:

   a first substrate (410) having a first electrode layer (414) and a first alignment layer (A1);
   a second substrate (420) opposite to the first substrate (410), wherein the second substrate (420) has a second electrode layer (424);
   a liquid crystal layer (430) between the first substrate (410) and the second substrate (420); and
   a plurality of spacers (450) between the first substrate (410) and the second substrate (420), wherein the spacers (450) are in an active region (AA) of the liquid crystal phase modulation device (400), wherein at least one of the spacers (450) has a long axis (LA) in an alignment direction (AD1) of the first alignment layer (A1), a width of said at least one of the spacers (450) narrows in the alignment direction (AD1), and said at least one of spacers (450) tapers along the alignment direction (AD1).

2. The liquid crystal phase modulation device (400) of claim 1, wherein the spacers (450) comprise a first spacer (450-1), a second spacer (450-2), and a third spacer (450-3), the second spacer (450-2) is immediately adjacent to the first spacer (450-1) and the third spacer (450-3), and a distance between the first spacer (450-1) and the second spacer (450-2) is different from a distance between the second spacer (450-2) and the third spacer (450-3).

3. The liquid crystal phase modulation device (400) of claim 1 or 2, further comprising:
   a sealant (440) between the first substrate (410) and the second substrate (420) and surrounding the liquid crystal layer (430), wherein the first substrate (410) has a first region (R1) and a second region (R2) aligned with the first region (R1) in a direction, a distance between the first region (R1) and an edge of the sealant (440) in the direction is less than a distance between the second region (R2) and the edge of the sealant (440) in the direction, and a density of the spacers (450) in the second region (R2) is greater than a density of the spacers (450) in the first region (R1).

4. The liquid crystal phase modulation device (400) of any of claims 1 to 3, wherein the first electrode layer (414) comprises a plurality of electrodes (414a) in the active region (AA), and the second electrode layer (424) covers the active region (AA).

5. The liquid crystal phase modulation device (400) of claim 4, wherein the first substrate (410) further comprises:

a first base substrate (412) having a surface, wherein the first electrode layer (414) is disposed on the surface of the first base substrate (412); and
a first dielectric layer (416) between the liquid crystal layer (430) and the first electrode layer (414), wherein the spacers (450) are between the first dielectric layer (416) and the second substrate (420).

6. The liquid crystal phase modulation device (400) of any of claims 1 to 3, wherein the first electrode layer (414) comprises a plurality of first electrodes (414a) in the active region (AA), and the second electrode layer (424) comprises a plurality of second electrodes (424a) in the active region (AA).

7. The liquid crystal phase modulation device (400) of claim 6, wherein the first substrate (410) further comprises:

a first base substrate (412) having a surface, wherein the first electrode layer (414) is disposed on the surface of the first base substrate (412); and
a first dielectric layer (416) between the liquid crystal layer (430) and the first electrode layer (414), wherein the spacers (450) are between the first dielectric layer (416) and the second substrate (420), wherein the second substrate (420) comprises:

a second base substrate (422) having a surface, wherein the second electrode layer (424) is disposed on the surface of the second base substrate (422); and
a second dielectric layer (426) between the liquid crystal layer (430) and the second electrode layer (424), wherein the spacers (450) are between the first dielectric layer (416) and the second dielectric layer (426).

8. The liquid crystal phase modulation device (400) of any of claims 1 to 7, the second substrate (420) further comprises:
a second alignment layer (A2) between the liquid crystal layer (430) and the second electrode layer (424), wherein the long axis (LA) of said at least one of the spacers (450) is in an alignment direction (AD2) of the second alignment layer (A2).

**Patentansprüche**

1. Eine Flüssigkristall-Phasenmodulationsvorrichtung (400), die Folgendes aufweist:

ein erstes Substrat (410) mit einer ersten Elektrodenschicht (414) und einer ersten Ausrichtungsschicht (A1);
ein zweites Substrat (420), das dem ersten Substrat (410) gegenüberliegt, wobei das zweite Substrat (420) eine zweite Elektrodenschicht (424) aufweist;
eine Flüssigkristallschicht (430) zwischen dem ersten Substrat (410) und dem zweiten Substrat (420); und
eine Vielzahl von Abstandshaltern (450) zwischen dem ersten Substrat (410) und dem zweiten Substrat (420), wobei sich die Abstandshalter (450) in einem aktiven Bereich (AA) der Flüssigkristall-Phasenmodulationsvorrichtung (400) befinden,
wobei mindestens einer der Abstandshalter (450) eine lange Achse (LA) in einer Ausrichtungsrichtung (AD1) der ersten Ausrichtungsschicht (A1) hat, wobei sich eine Breite des mindestens einen der Abstandshalter (450) in der Ausrichtungsrichtung (AD1) verengt, und wobei sich der mindestens eine der Abstandshalter (450) entlang der Ausrichtungsrichtung (AD1) verjüngt.

2. Die Flüssigkristall-Phasenmodulationsvorrichtung (400) nach Anspruch 1, wobei die Abstandshalter (450) einen ersten Abstandshalter (450-1), einen zweiten Abstandshalter (450-2) und einen dritten Abstandshalter (450-3) aufweisen, der zweite Abstandshalter (450-2) unmittelbar an den ersten Abstandshalter (450-1) und den dritten Abstandshalter (450-3) angrenzt, und ein Abstand zwischen dem ersten Abstandshalter (450-1) und dem zweiten Abstandshalter (450-2) von einem Abstand zwischen dem zweiten Abstandshalter (450-2) und dem dritten Abstandshalter (450-3) verschieden ist.

3. Die Flüssigkristall-Phasenmodulationsvorrichtung (400) nach Anspruch 1 oder 2, die ferner Folgendes aufweist:
ein Dichtungsmittel (440) zwischen dem ersten Substrat (410) und dem zweiten Substrat (420), das die Flüssigkristallschicht (430) umgibt, wobei das erste Substrat (410) einen ersten Bereich (R1) und einen zweiten Bereich (R2) aufweist, der mit dem ersten Bereich (R1) in einer Richtung ausgerichtet ist, ein Abstand zwischen dem ersten Bereich (R1) und einer Kante der Dichtungsmasse (440) in der Richtung kleiner ist als ein Abstand zwischen dem zweiten Bereich (R2) und der Kante der Dichtungsmasse (440) in der Richtung, und eine Dichte der Abstandshalter (450) in dem zweiten Bereich (R2) größer ist als eine Dichte der Abstandshalter (450) in dem ersten Bereich (R1).

4. Die Flüssigkristall-Phasenmodulationsvorrichtung (400) nach einem der Ansprüche 1 bis 3, wobei die erste Elektrodenschicht (414) eine Vielzahl von Elektroden (414a) in dem aktiven Bereich (AA) aufweist und die zweite Elektrodenschicht (424) den aktiven Bereich (AA) bedeckt.

5. Die Flüssigkristall-Phasenmodulationsvorrichtung (400) nach Anspruch 4, wobei das erste Substrat (410) ferner Folgendes aufweist:

ein erstes Basissubstrat (412) mit einer Oberfläche, wobei die erste Elektrodenschicht (414) auf der Oberfläche des ersten Basissubstrats (412) angeordnet ist; und
eine erste dielektrische Schicht (416) zwischen der Flüssigkristallschicht (430) und der ersten Elektrodenschicht (414), wobei die Abstandshalter (450) zwischen der ersten dielektrischen Schicht (416) und dem zweiten Substrat (420) liegen.

6. Die Flüssigkristall-Phasenmodulationsvorrichtung (400) nach einem der Ansprüche 1 bis 3, wobei die erste Elektrodenschicht (414) eine Vielzahl von ersten Elektroden (414a) im aktiven Bereich (AA) aufweist und die zweite Elektrodenschicht (424) eine Vielzahl von zweiten Elektroden (424a) im aktiven Bereich (AA) aufweist.

7. Die Flüssigkristall-Phasenmodulationsvorrichtung (400) nach Anspruch 6, wobei das erste Substrat (410) ferner Folgendes aufweist:

ein erstes Basissubstrat (412) mit einer Oberfläche, wobei die erste Elektrodenschicht (414) auf der Oberfläche des ersten Basissubstrats (412) angeordnet ist; und
eine erste dielektrische Schicht (416) zwischen der Flüssigkristallschicht (430) und der ersten Elektrodenschicht (414), wobei sich die Abstandshalter (450) zwischen der ersten dielektrischen Schicht (416) und dem zweiten Substrat (420) befinden, wobei das zweite Substrat (420) Folgendes aufweist:

ein zweites Basissubstrat (422) mit einer Oberfläche, wobei die zweite Elektrodenschicht (424) auf der Oberfläche des zweiten Basissubstrats (422) angeordnet ist; und
eine zweite dielektrische Schicht (426) zwischen der Flüssigkristallschicht (430) und der zweiten Elektrodenschicht (424), wobei die Abstandshalter (450) zwischen der ersten dielektrischen Schicht (416) und der zweiten dielektrischen Schicht (426) liegen.

8. Die Flüssigkristall-Phasenmodulationsvorrichtung (400) nach einem der Ansprüche 1 bis 7, wobei das zweite Substrat (420) ferner Folgendes aufweist:
eine zweite Ausrichtungsschicht (A2) zwischen der Flüssigkristallschicht (430) und der zweiten Elektrodenschicht (424), wobei die Längsachse (LA) des mindestens einen der Abstandshalter (450) in einer Ausrichtungsrichtung (AD2) der zweiten Ausrichtungsschicht (A2) liegt.

**Revendications**

1. Dispositif de modulation de phase à cristaux liquides (400), comprenant :

un premier substrat (410) ayant une première couche d'électrode (414) et une première couche d'alignement (A1) ;
un deuxième substrat (420) opposé au premier substrat (410), dans lequel le deuxième substrat (420) a une deuxième couche d'électrode (424) ;
une couche de cristaux liquides (430) entre le premier substrat (410) et le deuxième substrat (420) ; et
une pluralité d'espaceurs (450) entre le premier substrat (410) et le deuxième substrat (420), dans lequel les espaceurs (450) se trouvent dans une région active (AA) du dispositif de modulation de phase à cristaux liquides (400), dans lequel au moins l'un des espaceurs (450) a un axe long (LA) dans une direction d'alignement (AD1) de la première couche d'alignement (A1), une largeur dudit au moins un des espaceurs (450) se rétrécit dans la direction d'alignement (AD1) et ledit au moins un des espaceurs (450) s'effile dans la direction d'alignement (AD1).

**2.** Dispositif de modulation de phase à cristaux liquides (400) selon la revendication 1, dans lequel les espaceurs (450) comprennent un premier espaceur (450-1), un deuxième espaceur (450-2) et un troisième espaceur (450-3), le deuxième espaceur (450-2) est immédiatement adjacent au premier espaceur (450-1) et au troisième espaceur (450-3), et une distance entre le premier espaceur (450-1) et le deuxième espaceur (450-2) est différente d'une distance entre le deuxième espaceur (450-2) et le troisième espaceur (450-3).

**3.** Dispositif de modulation de phase à cristaux liquides (400) selon la revendication 1 ou 2, comprenant en outre :
un élément d'étanchéité (440) entre le premier substrat (410) et le deuxième substrat (420) et entourant la couche de cristaux liquides (430), dans lequel le premier substrat (410) a une première région (R1) et une deuxième région (R2) alignée avec la première région (R1) dans une direction, une distance entre la première région (R1) et un bord de l'élément d'étanchéité (440) dans la direction est inférieure à une distance entre la deuxième région (R2) et le bord de l'élément d'étanchéité (440) dans la direction, et une densité des espaceurs (450) dans la deuxième région (R2) est plus grande qu'une densité des espaceurs (450) dans la première région (R1).

**4.** Dispositif de modulation de phase à cristaux liquides (400) selon l'une quelconque des revendications 1 à 3, dans lequel la première couche d'électrode (414) comprend une pluralité d'électrodes (414a) dans la région active (AA), et la deuxième couche d'électrode (424) recouvre la région active (AA).

**5.** Dispositif de modulation de phase à cristaux liquides (400) selon la revendication 4, dans lequel le premier substrat (410) comprend en outre :

un premier substrat de base (412) ayant une surface, dans lequel la première couche d'électrode (414) est disposée sur la surface du premier substrat de base (412) ; et
une première couche diélectrique (416) entre la couche de cristaux liquides (430) et la première couche d'électrode (414), dans lequel les espaceurs (450) se trouvent entre la première couche diélectrique (416) et le deuxième substrat (420).

**6.** Dispositif de modulation de phase à cristaux liquides (400) selon l'une quelconque des revendications 1 à 3, dans lequel la première couche d'électrode (414) comprend une pluralité de premières électrodes (414a) dans la région active (AA), et la deuxième couche d'électrode (424) comprend une pluralité de deuxièmes électrodes (424a) dans la région active (AA).

**7.** Dispositif de modulation de phase à cristaux liquides (400) selon la revendication 6, dans lequel le premier substrat (410) comprend en outre :

un premier substrat de base (412) ayant une surface, dans lequel la première couche d'électrode (414) est disposée sur la surface du premier substrat de base (412) ; et
une première couche diélectrique (416) entre la couche de cristaux liquides (430) et la première couche d'électrode (414), dans lequel les espaceurs (450) se trouvent entre la première couche diélectrique (416) et le deuxième substrat (420), dans lequel le deuxième substrat (420) comprend :

un deuxième substrat de base (422) ayant une surface, dans lequel la deuxième couche d'électrode (424) est disposée sur la surface du deuxième substrat de base (422) ; et
une deuxième couche diélectrique (426) entre la couche de cristaux liquides (430) et la deuxième couche d'électrode (424), dans lequel les espaceurs (450) se trouvent entre la première couche diélectrique (416) et la deuxième couche diélectrique (426).

**8.** Dispositif de modulation de phase à cristaux liquides (400) selon l'une quelconque des revendications 1 à 7, le deuxième substrat (420) comprend en outre :
une deuxième couche d'alignement (A2) entre la couche de cristaux liquides (430) et la deuxième couche d'électrode (424), dans lequel l'axe long (LA) dudit au moins un des espaceurs (450) se trouve dans une direction d'alignement (AD2) de la deuxième couche d'alignement (A2).

| providing a reference substrate | 102 |

↓

| assembling a reference liquid crystal lens sample | 104 |

↓

| detecting the reference liquid crystal lens sample and obtaining thickness of plural portion of a liquid crystal layer | 106 |

↓

| determining a distribution according to the thicknesses the portions of the reference liquid crystal layer | 108 |

↓

| forming spacers over a substrate in the determined distribution | 110 |

↓

| rubbing an alignment layer over the substrate | 112 |

↓

| combining the substrate with another substrate and a liquid crystal layer, thereby obtaining the liquid crystal lens device | 114 |

Fig. 1

200

210

Detecting apparatus

220

Computing device

Photolithography apparatus 230

Fig. 2A

T, P

↓

| calculation operation | ~ 222 |

TD, FDX, FDY

↓

| Fitting operation | ~ 224 |

$TD_i$, $FDX_i$, $FDY_i$

↓

| Primary factor operation | ~ 226 |

$PF_i$, $FDX_i$, $FDY_i$

↓

| Adjustment operation | ~ 228 |

$AF_i$, $FDX_i$, $FDY_i$

↓

| Density operation | ~ 229 |

↓

$D_i$, $FDX_i$, $FDY_i$

Fig. 2B

Fig. 3A

Fig. 3B

EP 3 644 119 B1

300

340
330
332

E2
P
E1

FDY
FDX

Fig. 3C

Fig. 3D

Fig. 3E

EP 3 644 119 B1

Fig. 3F

400

SA ⟵⟶ AA ⟵⟶ SA

450      450T   430

422 ⎫
424 ⎬ 420
A2 ⎭

440
A1 ⎫
416 ⎬ 410
414 ⎪
412 ⎭

T'

P1 | W1

414a      450B

Fig. 3G

Fig. 4A

Fig. 4B

SA AA SA

400

450 450B 430

422 424 A2 420

440 A1 416 414 412 410

414a 450T

EP 3 644 119 B1

23

Fig. 4C

SA ←——→ AA ←————————————————————————————————→ SA

450

450-5      450-4      430

450-5B    450-5    450-4T

422
424      420
A2

440
A1
416     410
414
412

450-5T    450-4B

414a

## Fig. 5

Fig. 6

EP 3 644 119 B1

Fig. 7B

Fig. 7A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120314144 A
- US 20100033669 A
- US 20090015739 A
- EP 3076234 A
- JP 2015022195 B

- EP 2565707 A
- US 20050270472 A
- US 20090066884 A
- US 20150370105 A